# FASCICULE DE BREVET EUROPEEN

(11) **EP 0 486 345 B1**
(45) Date de publication et mention de la délivrance du brevet: **08.05.1996**
(21) Numéro de dépôt: 91402838.6
(22) Date de dépôt: 23.10.1991
(51) Int. Cl.: C12G 3/08

(54) **Procédé de production de bière sans alcool et d'arôme de bière**
Verfahren zur Herstellung von alkoholfreiem Bier und Bieraroma
Process for the production of non-alcoholic beer and beer aroma

(30) Priorité: 26.10.1990 FR 9013307
(43) Date de publication de la demande: 20.05.1992
(73) Titulaire: CECA S.A., F-92800 Puteaux (FR)
(72) Inventeur: Anglerot, Didier, F-64140 Lons (FR)
(74) Mandataire: Haicour, Philippe

(56) Documents cités:
- EP-A- 101 254
- EP-A- 228 572
- EP-A- 231 072
- FR-A- 2 564 451
- PATENT ABSTRACTS OF JAPAN, vol. 13, no. 224 (C-599)(3572), 24 Mai 1989

## Description

La présente invention se rapporte à un procédé de fabrication de bière sans alcool.

La bière est une boisson fermentée dont l'origine remonte à la nuit des temps. Elle est principalement fabriquée à partir du malt d'orge. très appréciée pour sa saveur et sa mousse généreuse. On pourra consulter à son sujet des ouvrages encyclopédiques comme l'Encyclopédie Ullmann (Ullmann's Encyclopedia of Industrial Chemistry, 5e ed., vol.4, p.421) ou l'Encyclopédie Kirk-Othmer (Encyclopedia of Chemical Technology, 3e ed., vol.3, p.692). On retiendra très schématiquement pour le présent propos qu'il s'agit d'une boisson riche en substances aromatiques fixes ou volatiles et en alcool. On s'est intéressé pour diverses raisons légales, diététiques, culturelles, voire religieuses, à la production de bières peu ou pas alcoolisées, et on s'est fixé comme objectif technique de fermenter des bières qui nonobstant leur faible teneur finale en alcool, conservent leurs propriétés organoleptiques.

Les bières normales titrent ordinairement de 4 à 8% alcool, mais il en est qui titrent plus de 10%, et d'autres qui dépassent à peine 2%. On leur oppose les bières à faible teneur en alcool qui titrent environ 2% d'alcool, les bières à basse teneur (0,5 à 1 %), les bières sans alcool qui doivent titrer moins de 0,5% d'alcool et les boissons maltées sans alcool à moins de 0,05% d'alcool. Seules ces deux dernières sont considérées par la législation comme des boissons sans alcool.

Diverses techniques ont été utilisées pour atteindre l'objectif de bières peu ou pas alcoolisées: fermentation rapide (EP 213220), que l'on arrête avant que le taux d'alcool ne s'élève trop, mais en bloquant la formation d'alcool, on réduit aussi la production des arômes spécifiques de la bière, fermentation à l'aide de souches sélectionnées pour ne pas produire d'alcool (EP 0245841); distillation (Cysewski G.R. et all, Biotech. Bioeng, 1976, 18, 1297; 1977, 19, 1125), par laquelle on élimine l'alcool par chauffage de toute la bière, ce qui du même coup dégrade les composantes protéiniques et les sucres ; séparation sur membranes (Cysewski G.R. et all, Biotech. Bioeng, 1978, 20, 1421), et leurs variantes que constituent l'osmose inverse (US 4317127) et la pervaporation (EP 332738), qui laissent néanmoins de 1 à 1,5% d'alcool dans le produit final et qui sont des techniques d'application très délicate.

La production d'alcool à partir de ses solutions aqueuses par extraction à l'aide d'adsorbants hydrophobes, plus particulièrement de silices hydrophobes ou de silico-aluminates zéolitiques hydrophobes, a été divulguée dans la demande de brevet européen N° 101 254. Les adsorbants retenus pour l'application de ce procédé sont des zéolites de rapport Si/Al supérieur à 12, et notamment des zéolites telles qu'obtenues selon le procédé décrit dans le brevet français N° 2 567 868 (CFR), les zéolites β, les offrétites riches en silice (FR 2 575 741), ou les zéolites USY de rapport Si/Al supérieur à 12 que Bibby et Milestone (J. Chem. Tech. Biotechnol, 1981,31, 732) ont révélées aptes à extraire des molécules dissoutes dans l'eau, mais moins polaires que l'eau. Il pouvait paraître séduisant de transposer le principe de cette technique à la fabrication de boissons sans alcools. D'ailleurs Farhadpour (Eur. Brew. Conv, 1983, 12, pp. 203-217, puis Processing, Sept. 1987, p.42 )a proposé d'extraire l'alcool de la bière par adsorption sur un adsorbant très voisin, une silice hydrophobe (silicalite).

Selon l'une ou l'autre de ces techniques, on obtient bien des bières à faible ou très faible teneur en alcool, mais il appert que les processus de fermentation qui génèrent peu d'alcool génèrent également peu d'arômes, et que dans les processus de désalcoolisation, on ne peut pas extraire l'alcool sans perte, tout au moins partielle des arômes, et il est souvent nécessaire de réajuster le produit en flaveurs au conditionnement final; par exemple à l'aide d'arômes extraits de levures (FR 2 106 755).

La présente invention remédie à ces inconvénients et offre un moyen de préparation industrielle d'une bière correctement désalcoolisée, mettant en oeuvre la désalcoolisation d'une bière normalement fermentée par adsorption sur adsorbant hydrophobe , mais offrant néanmoins à la dégustation les arômes et flaveurs d'une bière de bonne qualité. Le procédé comporte une phase de coadsorption de l'alcool et des arômes sur un tamis moléculaire hydrophobe, une phase intermédiaire de purge de la colonne, une phase de séparation de la phase aqueuse et de l'adsorbant chargé en alcool et en extraits aromatiques, une phase de désorption de la fraction coadsorbée sur le tamis moléculaire hydrophobe avec récupération de la phase désorbée, le fractionnement de cet adsorbat en alcool et extrait aromatique, et la recomposition d'une bière par mélange de l'éluat désalcoolisé et de l'extrait aromatique, avec accessoirement, saturation de la bière reconstituée en gaz carbonique.

Les tamis moléculaires qui sont les moyens de cette phase du procédé sont essentiellement des zéolites dont le rapport moléculaire Si/Al est supérieur à 12 et qui sont universellement considérées comme zéolites hydrophobes. Parmi les zéolites hydrophobes utiles pour l'invention, on trouve les zéolites de type MFI, les zéolites β, les zéolites théta et les offrétites riches en silice. Dans une forme préférée de l'invention, la phase zéolitique mise en oeuvre est préparée selon le brevet français n° 2 564 451 et mise en forme selon une méthode connue en soi. On peut également utiliser les faujasites à rapport Si/Al > 12, produits obtenus par désalumination selon moyens connus en eux-mêmes (par exemple, traitement à la vapeur et lavage acide ou traitement par SiCl₄).

Pour la mise en oeuvre du procédé, la phase de coadsorption sur tamis moléculaire hydrophobe peut être réalisée par tout moyen mettant en contact la zéolite et la bière à désalcooliser, par exemple mise en suspension en réacteur fermé, lit fluidisé, etc... On la conduit avantageusement sur colonne. dans ce cas, les diverses phases du procédé selon l'invention se déroulent comme suit.

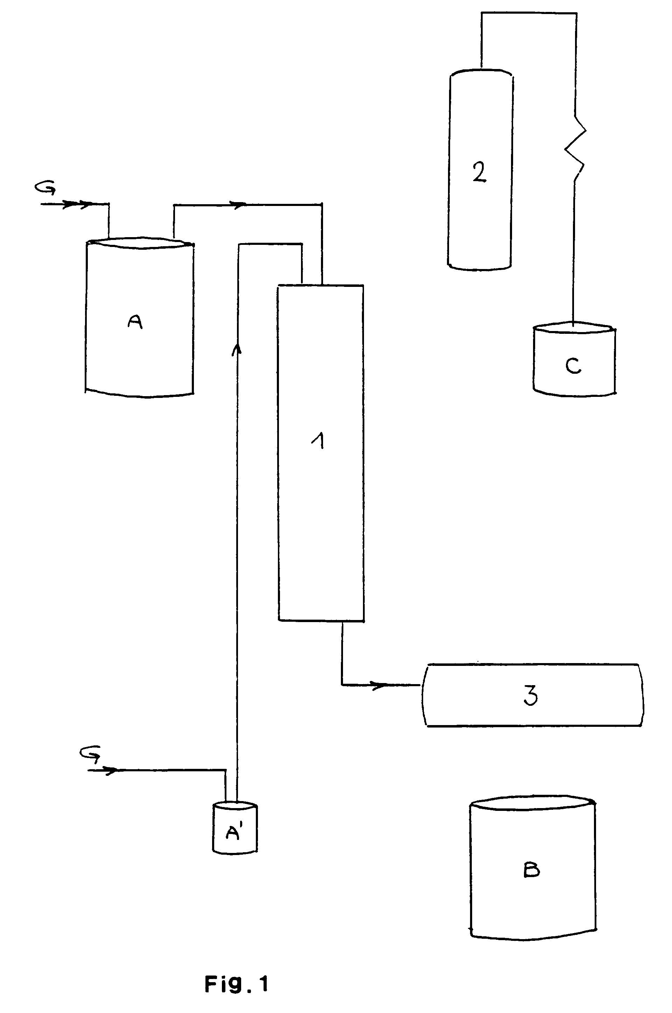

### a) La phase d'adsorption. (fig 1)

A partir d'un réservoir (A), et accessoirement d'un réservoir annexe (A′), on fait percoler la bière sous la poussée de gaz carbonique (G), dans une colonne (1) remplie de tamis moléculaire hydrophobe. La température y est maintenue en dessous de 30°C, et de préférence au voisinage de 5°C. L'ensemble est maintenu à l'abri de l'air; il est avantageux à cet effet de maintenir un ciel de gaz carbonique sous légère pression. On prolonge la percolation de la bière jusqu'à ce que l'éluat ait une concentration de 0,1% en alcool. Cet éluat se présente comme un liquide coloré, goûteux, mousseux, et qui a conservé la majorité de l'extrait sec (sucres et protéines) de la bière initiale. Il est stocké dans un réservoir (3). La phase d'adsorption est alors terminée.

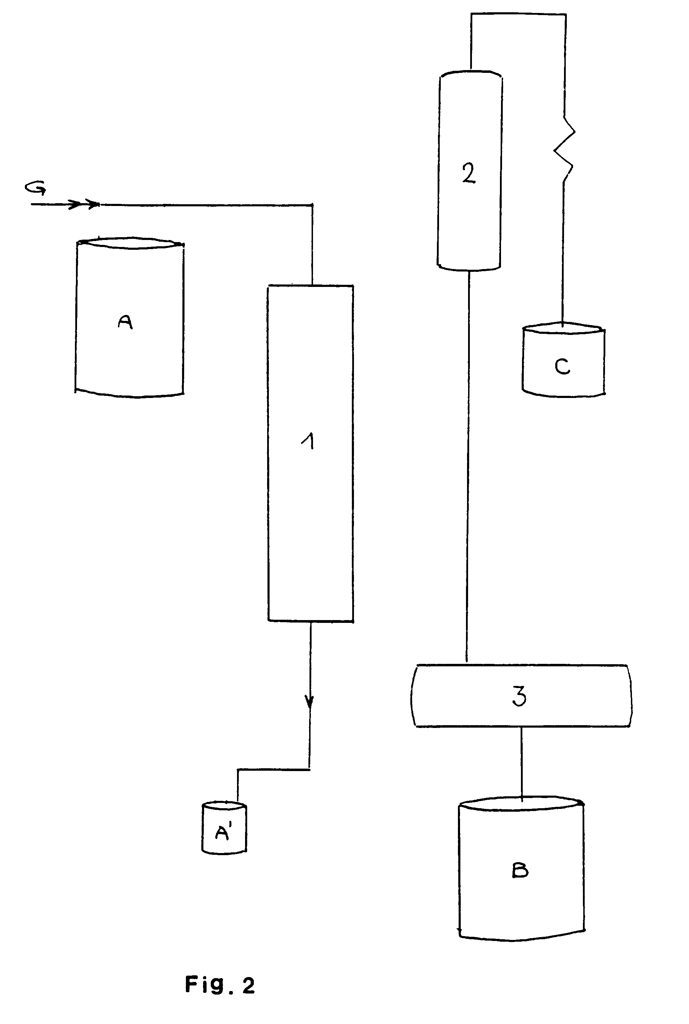

### b) Séparation phase aqueuse/adsorbant (fig 2).

On évacue la bière interstitielle par balayage de CO₂. Cette bière est momentanément stockée dans un réservoir annexe (A′) pour être repassée dans la colonne d'adsorption dans un cycle ultérieur.

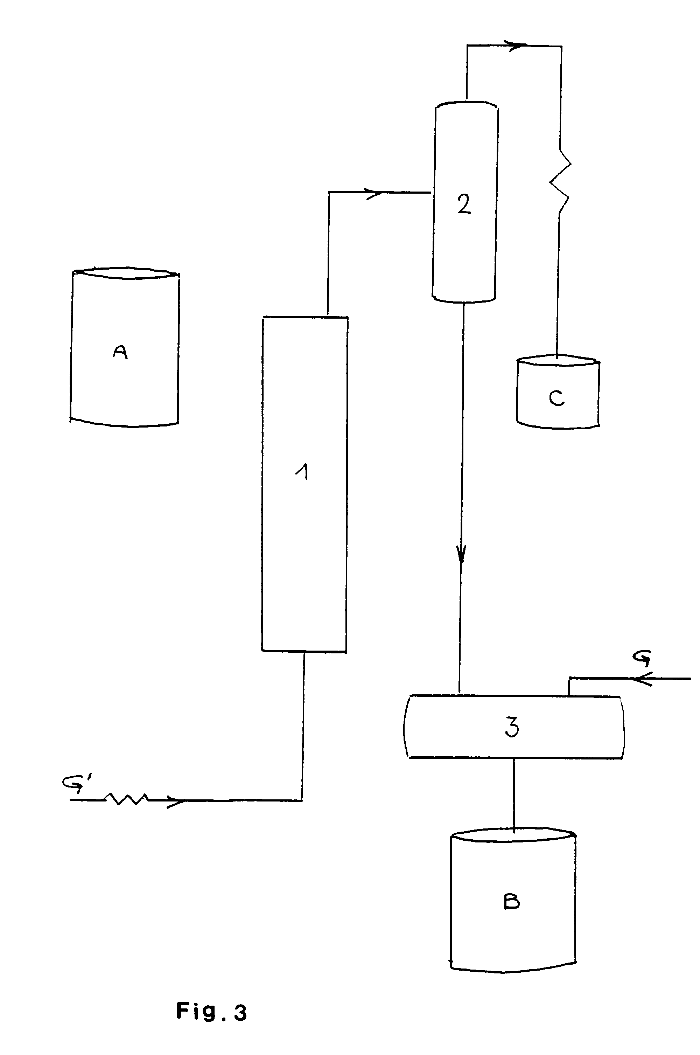

### c-d-e) Désorption, récupération de la phase désorbée, séparation de la phase désorbée en un alcoolat et une phase aromatisée (fig.3).

La désorption des produits alcooliques et aromatiques piégés dans la zéolite hydrophobe est effectuée soit par élution, soit par chauffage. On peut éluer par un solvant, mais il faudra ultérieurement réussir la séparation de ce solvant; une bonne méthode consiste à utiliser le CO₂ supercritique et récupérer les alcools et arômes par détente. On peut également éluer par un gaz chaud, à condition toutefois qu'il soit exempt d'oxygène. On préfère procéder par désorption thermique à l'aide de gaz carbonique, à des températures voisines de 150°C (G′). En sortie de colonne (1), le gaz chargé passe dans un séparateur (2), en tête duquel sort l'alcool, récupéré dans un réservoir (C), et au pied duquel on recueille l'extrait aqueux aromatique qui est stocké dans un réservoir (3). Cet extrait est particulièrement parfumé; il possède une odeur de bière caractéristique. C'est une phase aqueuse qui contient entre autres arômes légers, du β-phényléthanol et de l'alcool isoamylique.

### f) La phase suivante est l'opération de recomposition de la bière.

Elle consiste à remélanger dans le réservoir l'extrait précédent à l'éluat non alcoolique. Elle se déroule en pratique en même temps que la phase précédente au sein du réservoir (3). En fin d'opération, on représsurise en CO₂ et on évacue dans le réservoir de bière désalcoolisée (B)

### Exemple 1 (contre-exemple).

On simule une bière par une solution aqueuse à 5% d'éthanol, contenant 0,5% de β-phényléthanol comme simulateur d'arôme léger. Cette "pseudo-bière" est passée sur une colonne de zéolite hydrophobe de type MFI. On a mesuré sur la liqueur sortant de la colonne, les valeurs suivantes.

| Débit | Ethanol | β-phényléthanol |
|---|---|---|
| Témoin | 4,6 % | 17 mg/l |
| 0,5 l/h | 0,6 % | ≈1 mg/l |
| 2,5 l/h | 2,6 | ≈10 mg/l |

Ces chiffres témoignent de ce que la zéolite hydrophobe extrait sans séparation à la fois l'alcool et le mime de flaveur.

### Exemple 2

Une installation capable de produire 200.000 hl par an de bière sans alcool comporte trois adsorbeurs de 16 m3. Chaque adsorbeur contient 8 tonnes de zéolite de type MFI de rapport Si/Al supérieur à 50, synthétisée en milieu fluorure et aggloméré avec une argile, dont la capacité dynamique est d'environ 3,5% en éthanol, fonctionnant en cycles de 4 heures. Toute l'installation est maintenue sous pression de CO₂ d'environ 200.000 Pa. La qualité de la bière désalcoolisée est excellente. On y retrouve toutes les propriétés organoleptiques de la bière avant son traitement.

Outre la bière sans alcool, l'installation produit 8.000 hl d'alcool à 95°.

## Revendications

1. Procédé pour l'obtention d'une bière sans alcool à partir d'une bière naturellement alcoolisée, comportant les étapes suivantes :
a) mise en contact d'une bière alcoolisée avec un adsorbant solide constitué par une zéolite hydrophobe dont le rapport moléculaire Si/Al est supérieur à 12 ;
b) séparation de la phase aqueuse et de l'adsorbant;
c) désorption thermique des produits adsorbés;
d) récupération de la phase désorbée;
e) séparation de la phase désorbée en un alcoolat et une phase aromatisée aqueuse;
f) reconstitution d'une bière sans alcool par mélange des phases aqueuses récupérées à la fin des étapes b) et e);
g) accessoirement, saturation de la bière reconstituée en gaz carbonique.

2. Procédé selon la revendication 1, caractérisé en ce que la zéolite hydrophobe de rapport moléculaire Si/Al est supérieur à 12 est choisie dans le groupe constitué par les zéolites de type MFI, les zéolites là, les zéolites théta, les offrétites et les faujasites.

3. Procédé selon les revendications 1 et 2, caractérisé en ce que l'adsorbant est une zéolite du type MFI.

4. Procédé selon les revendications 1 et 2, caractérisé en ce que l'adsorbant est une zéolite β.

5. Procédé selon les revendications 1 et 2, caractérisé en ce que l'adsorbant est une zéolite thêta.

6. Procédé selon les revendications 1 et 2, caractérisé en ce que l'adsorbant est une offrétite.

7. Procédé selon les revendications 1 et 2, caractérisé en ce que l'adsorbant est une faujasite.

8. Procédé selon les revendications 1 et 2, caractérisé en ce que la désorption thermique est opérée à l'aide de gaz carbonique.

9. Procédé selon les revendications 1 et 2, caractérisé en ce que le contact entre la bière alcoolisée et l'adsorbant est réalisé dans une colonne remplie d'adsorbant.

10. Procédé pour l'obtention de concentrés d'arômes naturels de bière comportant les étapes suivantes:
a) mise en contact d'une bière alcoolisée avec un adsorbant solide constitué par une zéolite hydrophobe dont le rapport moléculaire Si/Al est supérieur à 12;
b) séparation et récupération de l'adsorbant;
c) désorption thermique des produits adsorbés;
d) récupération de la phase désorbée;
e) séparation de la phase désorbée en un alcoolat et une phase aromatisée aqueuse qui constitue le concentré d'arômes naturels de bière.

## Patentansprüche

1. Verfahren zur Herstellung eines alkoholfreien Bieres von einem natürlichen alkoholhaltigen Bier ausgehend, das die folgenden Schritte umfaßt:
a) Inkontaktbringen eines alkoholhaltigen Bieres mit einem festen Adsorbens, das aus einem hydrophoben Zeolith besteht, dessen Si/Al-Molekularverhältnis oberhalb von 12 liegt;
b) Trennung der wäßrigen Phase und des Adsorbens;
c) thermische Desorption der adsorbierten Produkte;
d) Wiedergewinnung der desorbierten Phase;
e) Trennung der desorbierten Phase in ein Alkoholat und eine wäßrige aromatisierte Phase;
f) Neuzusammenstellung eines alkoholfreien Bieres durch Mischen der am Ende der Schritte b) und e) wiedergewonnenen wäßrigen Phasen;
g) gegebenenfalls Sättigung des neu zusammengesetzten Bieres mit Kohlendioxid.

2. Verfahren nach Anspruch 1, dadurch gekennzeichnet, daß der hydrophobe Zeolith mit einem Si/Al-Molekularverhältnis von größer als 12 ausgewählt ist aus der Gruppe von Zeolithen des Typs MFI, β-Zeolithen, theta-Zeolithen, Offretiten und Faujasiten.

3. Verfahren nach den Ansprüchen 1 und 2, dadurch gekennzeichnet, daß das Adsorbens ein Zeolith des Typs MFI ist.

4. Verfahren nach den Ansprüchen 1 und 2, dadurch gekennzeichnet, daß das Adsorbens ein β-Zeolith ist.

5. Verfahren nach den Ansprüchen 1 und 2, dadurch gekennzeichnet, daß das Adsorbens ein Theta-Zeolith ist.

6. Verfahren nach den Ansprüchen 1 und 2, dadurch gekennzeichnet, daß das Adsorbens ein Offretit ist.

7. Verfahren nach den Ansprüchen 1 und 2, dadurch gekennzeichnet, daß das Adsorbens ein Faujasit ist.

8. Verfahren nach den Ansprüchen 1 und 2, dadurch gekennzeichnet, daß die thermische Desorption mit Hilfe von Kohlendioxid durchgeführt wird.

9. Verfahren nach den Ansprüchen 1 und 2, dadurch gekennzeichnet, daß der Kontakt zwischen dem alkoholhaltigen Bier und dem Adsorbens in einer mit dem Adsorbens gefüllten Kolonne durchgeführt wird.

10. Verfahren zur Herstellung von Konzentraten natürlicher Bieraromen, das die folgenden Schritte umfaßt:
a) Inkontaktbringen eines alkoholhaltigen Bieres mit einem festen Adsorbens bestehend aus einem hydrophoben Zeolith, dessen Si/A1-Molekularverhältnis oberhalb von 12 liegt;
b) Trennung und Wiedergewinnung des Adsorbens;
c) thermische Desorption der adsorbierten Produkte;
d) Wiedergewinnung der desorbierten Phase;
e) Trennung der desorbierten Phase in ein Alkoholat und eine wäßrige aromatisierte Phase, die das Konzentrat natürlicher Bieraromen darstellt.

## Claims

1. Process for the production of a non-alcoholic beer from a naturally alcohol-containing beer, which process comprises the following stages:
a) bringing an alcohol-containing beer into contact with a solid adsorbent consisting of a hydrophobic zeolite, the Si/Al molecular ratio of which is greater than 12;
b) separation of the aqueous phase and of the adsorbent;
c) thermal desorption of the adsorbed products;
d) recovery of the desorbed phase;
e) separation of the desorbed phase into an alcoholate and an aqueous flavoured phase;
f) reconstitution of a non-alcoholic beer by mixing the aqueous phases recovered at the end of stages b) and e);
g) optionally, saturation of the reconstituted beer with carbon dioxide gas.

2. Process according to Claim 1, characterized in that the hydrophobic zeolite with an Si/Al molecular ratio greater than 12 is chosen from the group consisting of zeolites of MFI type, zeolites β, zeolites theta, offretites and faujasites.

3. Process according to Claims 1 and 2, characterized in that the adsorbent is a zeolite of MFI type.

4. Process according to Claims 1 and 2, characterized in that the adsorbent is a zeolite β.

5. Process according to Claims 1 and 2, characterized in that the adsorbent is a zeolite theta.

6. Process according to Claims 1 and 2, characterized in that the adsorbent is an offretite.

7. Process according to Claims 1 and 2, characterized in that the adsorbent is a faujasite.

8. Process according to Claims 1 and 2, characterized in that the thermal desorption is carried out using carbon dioxide gas.

9. Process according to Claims 1 and 2, characterized in that contact between the alcohol-containing beer and the adsorbent is carried out in a column filled with adsorbent.

10. Process for the production of natural beer flavour concentrates, which process comprises the following stages:
a) bringing an alcohol-containing beer into contact with a solid adsorbent consisting of a hydrophobic zeolite, the Si/Al molecular ratio of which is greater than 12;
b) separation and recovery of the adsorbent;
c) thermal desorption of the adsorbed products;
d) recovery of the desorbed phase;
e) separation of the desorbed phase into an alcoholate and an aqueous flavoured phase which constitutes the natural beer flavour concentrate.
